Europäisches Patentamt

(19) European Patent Office

Office européen des brevets

(11) EP 0 666 199 B1

## (12) FASCICULE DE BREVET EUROPEEN

(45) Date de publication et mention
de la délivrance du brevet:
**29.09.1999 Bulletin 1999/39**

(51) Int. Cl.⁶: **B60R 16/02**, G06F 13/42

(21) Numéro de dépôt: **95200197.2**

(22) Date de dépôt: **27.01.1995**

(54) **Système électronique de véhicule automobile avec circuit d'interface entre deux bus différents**

Elektronisches System eines Kraftfahrzeugs mit zwischen zwei verschiedenen Bussen gelegener Schnittstellenschaltung

Electronic System of an Automobile with an Interface Circuit between two different Busses

(84) Etats contractants désignés:
**DE FR GB**

(30) Priorité: **02.02.1994 FR 9401130**

(43) Date de publication de la demande:
**09.08.1995 Bulletin 1995/32**

(73) Titulaire:
**Mannesmann VDO Aktiengesellschaft**
**60388 Frankfurt am Main (DE)**

(72) Inventeur: **Martin, Alexis**
**F-75008 Paris (FR)**

(74) Mandataire:
**Charpail, François et al**
**Société Civile S.P.I.D.**
**156, Boulevard Haussmann**
**75008 Paris (FR)**

(56) Documents cités:
**EP-A- 0 443 103**     **EP-A- 0 451 825**
**WO-A-93/25412**     **FR-A- 2 578 070**

• **RADIO FERNSEHEN ELEKTRONIK, vol.40, no.8, 1991, BERLIN DD pages 471 - 474 U. GODEMANN 'Der I2C-Bus'**
• **RADIO FERNSEHEN ELEKTRONIK, vol.40, no.10, 1991, BERLIN DD pages 584 - 589 W. LAWRENZ 'auto-busse für sensor-aktor-vernetzung'**
• **Philips Semiconductors: "The I2C-bus and how to use it"; Janvier 1992**
• **Philips Semiconductors: "Stand-alone VAN-Controller PCC1008T"; Décembre 1992**

## Description

La présente invention concerne un système électronique de véhicule automobile comportant une pluralité de dispositifs appelés applications comprenant chacun au moins un micro-contrôleur et divers autres constituants, ainsi qu'un premier bus de type I$^2$C assurant les communications entre les constituants à l'intérieur de l'application, un second bus de type série, différent du premier bus, assurant la communication des applications entre elles, et au niveau de chaque application un circuit d'interface muni d'une mémoire vive de réception pour des messages et destiné à assurer une communication entre le premier bus et le second bus et, le micro-contrôleur étant muni de moyens pour, lorsque, agissant en tant que maître, il lit à partir du circuit d'interface esclave des données constituant un message, renvoyer un accusé de réception après chaque octet reçu et pour, lorsqu'il ne désire plus lire, arrêter le message en ne renvoyant pas d'accusé de réception.

Le bus I$^2$C est décrit par exemple dans une brochure intitulée "The I$^2$C bus and how to use it", Janvier 1992, éditée par la société Philips Semiconductors.

Un tel système est utilisé dans les véhicules automobiles pour assurer la commande et/ou la gestion de différents dispositifs électriques en évitant d'employer de nombreuses connexions affectées à chacun des dispositifs. On pourrait imaginer d'utiliser un bus de même type aussi bien à l'intérieur d'une application qu'entre les applications. Il existe au moins une telle réalisation (dans certaines versions du modèle "Safrane" du fabricant d'automobiles Renault) dans laquelle des applications (par exemple une unité d'affichage, un auto-radio, un lecteur de "compact-disc", un radiotéléphone, un système de navigation, etc.) possédant chacune un bus interne de type I$^2$C sont reliées entre elles par un bus également de type I$^2$C : pour obtenir une immunité au bruit suffisante, le bus I$^2$C inter-applications doit être blindé, ce qui est coûteux. C'est pourquoi on préfère maintenant utiliser deux bus différents (par exemple un bus VAN et un bus I$^2$C) parce que chacun a des qualités propres : le bus VAN par son immunité au bruit est mieux adapté à un usage "externe" entre les applications, alors que le bus est mieux adapté à un usage "interne" dans une application, du fait de ses performances et de son adéquation avec les entrées/sorties des circuits intégrés (il existe de plus en plus de modèles de circuits intégrés "intelligents" contrôlables par un bus du genre du bus I$^2$C, c'est-à-dire comportant des interfaces d'entrée/sortie intégrés qui leur permettent de communiquer directement entre eux par le bus I$^2$C, par exemple des mémoires de toutes sortes, des circuits de syntonisation radio, etc).

Un système à deux bus est connu de la demande de brevet EP-A-0 451 825 (Sumitomo Wiring Systems Ltd). Le système décrit par ce document comporte deux bus dont les vitesses sont différentes, une ligne de bus lente étant localisée près d'une application pour donner des ordres qui sont mis en oeuvre dans l'application au moyen d'une sorte de micro-contrôleur appelé "control IC", alors qu'une autre ligne de bus, rapide, est située dans l'habitacle du véhicule pour interconnecter divers éléments de commande de toutes les applications, appelés "electronic control units". Entre le bus rapide et chaque bus lent dirigé vers une application est placé un circuit d'interface.

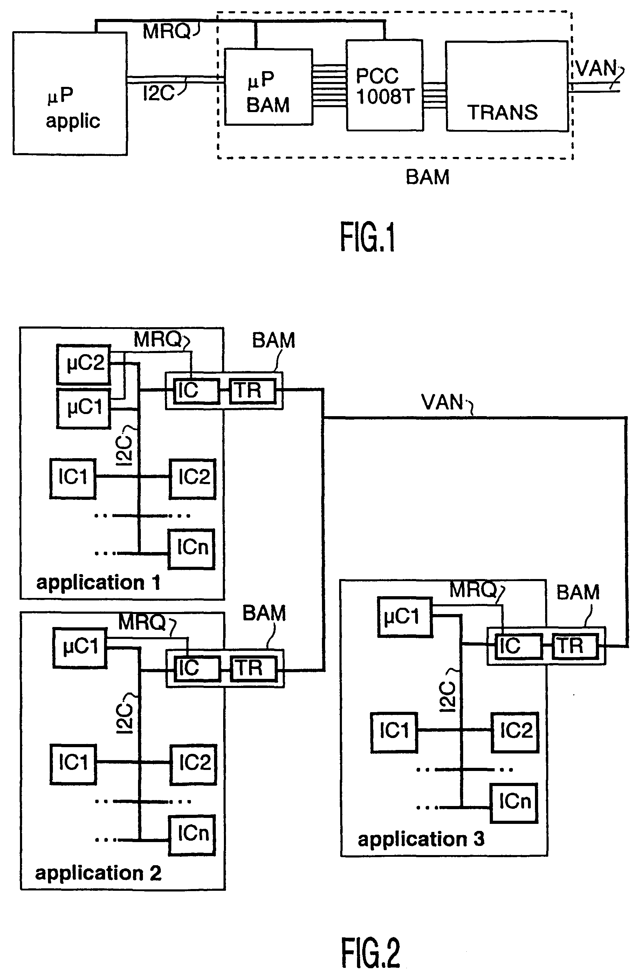

Un tel système peut être amélioré pour l'utiliser dans des véhicules modernes, où l'on ne désire pas seulement commander par tout ou rien des dispositifs électriques, mais aussi assurer des fonctions complexes concernant des dispositifs électroniques, notamment dans des applications de loisir telles qu'un ensemble audio, et rendre en outre possible l'échange de renseignements entre eux. Un circuit d'interface connu, dans un contexte de ce type, est représenté par la figure 1. Il comporte un circuit PCC1008T (décrit dans la spécification "Stand-Alone VAN-Controller PCC1008T", éditée par la société Philips-Semiconductors) qui est destiné à assurer l'interface entre un microprocesseur (µP BAM) et un bus de type automobile de type VAN (le sigle VAN correspondant à "Vehicule Area Network" qui signifie "réseau dans le cadre d'un véhicule"). Le circuit PCC1008T est relié au bus VAN par un circuit de transmission (TRANS) et, au moyen d'une connexion parallèle, à un port parallèle du microprocesseur en question (µP BAM), qui est dévolu à l'usage en tant qu'interface, et est relié à son tour au micro-contrôleur (µP applic) d'une application par un bus I$^2$C. Le PCC1008T apparait au microprocesseur comme un organe périphérique organisé à la façon d'une mémoire, avec en interface quatre registres directement accessibles pour lecture et quatre registres directement accessibles pour écriture. Il possède en outre deux registres de réception de trames VAN, utilisés tour à tour. La structure de ce circuit d'interface est relativement complexe.

Un but de l'invention est de fournir un circuit d'interface qui assure un haut degré d'intelligence dans les communications entre le bus spécifique automobile et le ou les micro-contrôleur(s) interne(s) d'une application, et assure directement la connexion entre le bus externe et le bus interne série de l'application, lui même relié au micro-contrôleur de l'application.

A cet effet le système selon l'invention est remarquable en ce qu'il est en outre muni de moyens pour envoyer après réception complète d'un message une trame I$^2$C signifiant qu'il a acquis toutes les données, et le circuit d'interface esclave est en outre muni de moyens pour, lorsqu'il est émetteur, interpréter la réception d'une telle trame I$^2$C.

L'invention est notamment basée sur l'idée de combiner dans un même circuit d'interface un protocole de type EEPROM avec des exigences de circuits de communication.

Le circuit d'interface est avantageusement muni de moyens pour définir dans sa mémoire vive de réception des zones à utiliser au moyen de deux pointeurs d'adresse mis à jour à chaque instant en fonction de la réalisation des tâches qui sont dévolues à cette mémoire de réception, pointeurs qui délimitent, en considérant la mémoire comme circulaire, les zones disponibles respectivement pour la lecture et l'écriture. Ceci permet au circuit d'interface de travailler avec moins de mémoire vive, une mémoire de ce type étant coûteuse en surface de silicium.

Une ligne dite de requête entre le circuit d'interface et le micro-contrôleur étant présente pour informer ce dernier lorsque de l'information nouvelle doit être acquise par lui, le circuit d'interface comporte avantageusement des moyens pour, si le demande en a été faite par le micro-contrôleur, activer la ligne de requête à chaque fois qu'aucune trame n'a été reçue de l'extérieur depuis un temps prédéterminé éventuellement programmable.

Ceci permet d'économiser des moyens de mesure de temps destinés à des tâches de surveillance dans le micro-contrôleur d'une application, quand on désire détecter si une des autres applications est déconnectée.

Ces aspects de l'invention ainsi que d'autres aspects plus détaillés apparaîtront plus clairement grâce à la description suivante d'un mode de réalisation non limitatif.

La figure 1 représente schématiquement un adaptateur pour bus VAN de l'art antérieur.
La figure 2 représente un système employant des circuits d'interface selon l'invention.
Les figures 3 et 4 représentent schématiquement des structures de trames de communication.

L'art antérieur représenté par la figure 1 a déjà été décrit plus haut.

Le système représenté par la figure 2 comporte plusieurs dispositifs appelés "application 1", "application 2", "application 3". A l'intérieur d'une application, il y a un bus d'interconnexion de type $I^2C$ pour interconnecter les éléments internes de l'application, notamment un ou plusieurs micro-contrôleurs "$\mu C1$", "$\mu C2$" et divers circuits intégrés spécialisés "IC1", "IC2", ..."ICn". Les applications 1, 2, 3 sont interconnectées entre elles au moyen d'un bus dit "VAN", distinct du bus $I^2C$ ci-dessus. Entre les deux bus $I^2C$ et VAN sont prévus des circuits d'interface BAM (pour "Bus Adaptor Module") placés entre le bus VAN et le bus $I^2C$. Il est prévu en outre une ligne dite MRQ (sigle correspondant à "Master Request" qui signifie : requête du maître) entre le circuit d'interface BAM et le micro-contrôleur $\mu C$, pour informer ce dernier lorsque de l'information nouvelle doit être acquise par lui, ligne qui est activée par le circuit d'interface BAM, quand il a quelque information ou une trame VAN à apporter au micro-contrôleur maître et qui est désactivée quand toutes les motifs d'interruption ont été supprimés.

L'invention concerne le circuit d'interface BAM. Celui-ci permet la communication entre, d'une part le ou les micro-contrôleurs $\mu C1$, $\mu C2$ contenus dans une application et communiquant par le bus $I^2C$, et d'autre part le bus VAN.

Le bus VAN est un bus différentiel de type série qui transmet des blocs d'informations appelés "trames". Toutes les trames d'un bus VAN ont la même constitution, laquelle est prédéfinie par une norme ISO (ISO/TC 22/WG 1). Ce bus comporte deux conducteurs qui transportent respectivement un signal numérique et le signal complémentaire de ce signal numérique, ce qui procure une meilleure résistance au bruit. Une trame de signaux VAN comprend plusieurs champs successifs, avec au début un code caractéristique de début de trame, puis un champ d'identification spécifiant l'adresse de destination de la trame, un champ de commande indiquant notamment le mode de communication (écriture ou lecture, message d'accusé de réception demandé ou non, nature du message), un champ de données proprement dites, un champ de contrôle de redondance utilisé pour détecter une erreur dans la trame et contenant un mot calculé d'après le contenu de l'ensemble du message, un code de fin de données, une éventuelle période prévue pour un accusé de réception, et un code de fin de trame. Du fait qu'il n'y a pas de fil d'horloge, un codage dit "Manchester" est utilisé ; c'est un codage dans lequel un bit usuel est codé sur deux unités de temps (une unité de temps étant celle d'un bit non codé Manchester) avec une transition entre la première et la deuxième unités de temps ; cette transition est de 0 vers 1 ou de 1 vers 0 selon la valeur logique du bit. Dans le standard VAN, un bit sur quatre est codé en Manchester, procurant ainsi périodiquement des transitions qui peuvent être utilisés comme impulsions d'horloge.

Le bus $I^2C$ est aussi un bus standard, qui est particulièrement adapté à l'interconnexion de circuits intégrés entre eux. Il comporte deux lignes bi-directionnelles de type série à mots de huit bits, une ligne étant consacrée aux données, et l'autre à une horloge. Chaque entité reliée au bus est adressable au moyen d'une adresse unique et de simples relations maître/esclave existent entre elles.

Les bus VAN et $I^2C$ sont tous deux des bus à deux états, un état dominant et un état récessif. L'état récessif est celui que prend le bus lorsqu'il est laissé "en l'air", alors que l'état dominant est imposé par un module lié au bus. Ils sont également tous deux multi-maîtres, prévoyant un protocole de détection de collisions pour prévenir la dégradation de données si deux maîtres démarrent ensemble un transfert de données. Un arbitrage bit à bit sur un champ spécifique d'une trame est prévu à cet effet, selon lequel celui des maîtres qui fournit le premier un état récessif et voit cet état contredit par un état dominant imposé par l'autre maître perd la priorité.

Le circuit d'interface BAM est constitué d'un élément de transmission TR et d'un élément de gestion IC. L'élément de transmission TR assure l'émission/réception des trames VAN et détecte notamment certaines erreurs sur la base de la redondance apportée par les deux conducteurs complémentaires. L'élément de gestion IC est muni de moyens pour comprendre les trames $I^2C$ qui lui parviennent et pour réaliser les actions éventuellement demandées par elles, par exemple les traduire en trames VAN et les faire transmettre par l'élément TR. Il est également muni de moyens pour transformer les trames VAN issues de l'élément TR et les transmettre au bus $I^2C$, et de moyens pour rendre compte des erreurs sur le bus VAN au micro-contrôleur de l'application. Les moyens en question ici sont essentiellement réalisés sous la forme de logiciels.

Sur un bus $I^2C$, il est possible de connecter des éléments qui sont soit maîtres soit esclaves. Habituellement un élément, le micro-contrôleur, est le maître du bus $I^2C$ dont il synchronise, démarre et arrête la transmission. Les autres éléments sont esclaves. Néanmoins certains maîtres peuvent aussi être des esclaves dans une configuration à plusieurs maîtres. Cela peut être le cas par exemple dans une application de réception de radio, comportant deux micro-contrôleurs $\mu C1$ et $\mu C2$ qui peuvent tous deux être maîtres, comme dans "application 1" de la figure. Le circuit d'interface BAM est toujours esclave.

Le micro-contrôleur s'adresse au circuit d'interface BAM de la même manière qu'il s'adresserait à une mémoire dite EEPROM, compatible $I^2C$. Pour plus de précisions, on peut se reporter par exemple à la documentation du modèle de mémoire EEPROM référencé PCF8581 (commercialisé par la société Philips-Semiconductors). En principe les mêmes types d'adressage et le même format de trames $I^2C$ sont utilisés pour lire l'information du circuit d'interface BAM et pour envoyer de l'information au circuit d'interface BAM. Le mode d'interaction de base du dispositif d'interface BAM rappelle en partie la spécification du circuit intégré PCC1008T, mentionné plus haut.

Une mémoire vive de réception (mémoire tampon) est prévue dans l'élément IC du circuit d'interface BAM. Il est nécessaire d'avoir dans cet élément une mémoire suffisante pour recevoir des messages de la part de chaque équipement connecté à l'application, messages dont la longueur dépend de l'application émettrice. Dans le circuit d'interface BAM la mémoire tampon de réception de trames VAN en provenance d'autres applications est gérée de façon dynamique, c'est-à-dire que sa dimension est variable en fonction de la longueur des messages enregistrés, par opposition au circuit intégré PCC1008T, mentionné plus haut, dans lequel la gestion est statique. Elle comporte une zone dite de lecture où des trames VAN sont prêtes à être lues par le micro-contrôleur maître, et une zone dite d'écriture où de nouvelles trames peuvent être reçues de l'extérieur. Le flux des échanges détermine la taille de la partie de lecture et celle de la partie d'écriture : dès qu'une nouvelle trame est déposée dans la zone d'écriture, la partie de cette zone qui contient la dite trame devient une zone de lecture, qui donc augmente d'autant, et la zone d'écriture diminue d'autant. Pour définir les zones à un instant donné, il est prévu deux pointeurs AD1 et AD2, qui délimitent les zones disponibles respectivement pour la lecture et l'écriture, en considérant la mémoire comme circulaire (ce qui implique notamment que la valeur de l'adresse maximale plus un est égale à la valeur de l'adresse minimale).

L'adresse de lecture est définie entre AD1 inclus et AD2 exclu, dans le sens des adresses croissantes. Le micro-contrôleur $\mu C$ peut alors lire de façon fiable dans la mémoire du circuit d'interface esclave. La zone de lecture est définie par l'élément esclave (le circuit d'interface) de telle manière que l'information contenue dans cette zone soit pertinente et que les premiers octets lus par l'élément maitre définissent à son intention le nombre d'octets à lire. Si néanmoins l'élément maitre essaye de continuer à lire la mémoire de l'élément esclave au delà de AD2, l'élément esclave n'incrémente plus son propre pointeur d'adresse, la ligne de données est relâchée (état récessif), et de ce fait le maitre lit à chaque fois la valeur décimale 255.

Lorsque de l'information nouvelle à lire est préparée par l'élément esclave, et dès que cette information est utilisable, si l'information dans la zone de lecture n'est pas en cours de lecture par l'élément maitre, les informations de longueur de zone à lire et l'adresse AD2 sont mises à jour pour indiquer au lecteur maitre qu'il existe une nouvelle trame à lire. Si par contre une certaine longueur d'information a déjà été lue par l'élément maitre, seule l'adresse AD2 est mise à jour, pour indiquer la nouvelle frontière entre les zones disponibles respectivement pour la lecture et l'écriture. La zone de lecture peut être agrandie jusqu'à ce que AD2 = AD1 - 1 . Au moins un octet est laissé dans la zone d'écriture, pour distinguer le cas d'une mémoire tampon vide. Quand AD2 = AD1 - 1 , l'élément IC du circuit d'interface ne peut plus recevoir de trames VAN et refuse les trames qui arrivent.

Différents "services" sont prévus. Ils doivent couvrir extensivement la norme VAN, dans le but de remplir tous les services "VAN" possibles. Un service peut aussi représenter un service interne au circuit d'interface BAM, par exemple l'état de la ligne VAN. Il existe entre autres un service "transmission" qui a comme argument une trame VAN, contenant entre autres un champ identificateur. Une application recevra une trame VAN si et seulement si l'identificateur de cette trame est contenu dans la configuration de réception de l'application.

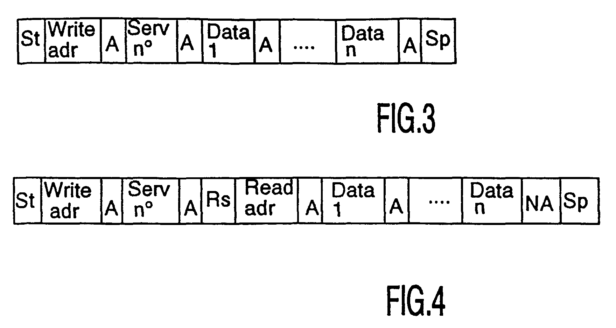

Les trames $I^2C$ ont la structure générale représentée par les figures 3 et 4.

La figure 3 représente par exemple un message de transfert de données depuis le micro-contrôleur vers le circuit d'interface BAM. Ce message comporte un code de départ de message (St) selon la norme $I^2C$ (à savoir, la ligne de données présente une transition vers le bas pendant que la ligne d'horloge est haute), un octet d'adresse destinataire (Write adr), qui est en l'occurrence l'adresse du circuit d'interface BAM, un bit pour un accusé de réception (A) de la part du circuit d'interface BAM, un octet pour le numéro du service demandé (Serv n°), à nouveau un bit pour un accusé de réception (A), un premier octet de données (DATA1), un bit pour un accusé de réception (A), un deuxième octet de données (DATA2), et ainsi de suite, le message étant terminé par un code de fin (Sp) selon la norme $I^2C$ (la ligne de données présente une transition vers le haut pendant que la ligne d'horloge est haute). Chacun des octets de donnée (DATA1, DATA2, etc) correspond à un paramètre du service demandé.

La figure 4 représente un message comme le précédent, mais suivi d'un message lu dans le circuit d'interface BAM par le microcontrôleur. Ce message comporte un code de départ de message (St) comme dans le message de la figure 2, un octet d'adresse destinataire c'est-à-dire celle du microcontrôleur dans lequel le circuit d'interface BAM veut écrire (Write adr), un bit pour un accusé de réception (A) de la part du microcontrôleur, un octet de numéro du service demandé (Serv n°), et à nouveau un bit pour un accusé de réception (A). Après les données envoyées au circuit d'interface (non représentées), le code "stop" est remplacé par un code "restart". Une telle procédure "restart" permet un changement de sens de communication entre le maitre et l'esclave : après une écriture vers l'esclave, le maitre lit l'esclave en utilisant la "read adress" qui suit la condition "restart". Une condition "stop" suivie de "start" pourrait également convenir, cependant en laissant la ligne à l'état inactif après le stop on permettrait éventuellement à un autre maitre de prendre la main sur le bus $I^2C$, or il ne faut pas qu'un autre maitre puisse parler à l'esclave alors qu'il a été laissé en suspens après l'écriture. Le code "restart" est suivi par une nouvelle adresse, qui indique en outre qu'une lecture est maintenant demandée, un bit pour un accusé de réception (A) de la part du microcontrôleur, un premier octet de données (DATA1), un bit pour un accusé de réception (A), et ainsi de suite.

Tout octet pour lequel un accusé de réception (A) a été émis est considéré par l'émetteur comme acquis par le récepteur, et l'élément IC du circuit d'interface incrémente le pointeur d'adresse de sa mémoire. Tout octet pour lequel aucun accusé de réception n'a été émis est considéré comme non acquis par le récepteur. Alors le pointeur d'adresse n'est pas incrémenté.

Lorsque le maitre a obtenu les données voulues ou s'il n'est plus prêt à recevoir des données, il arrête le message en ne renvoyant pas d'accusé de réception (A), et le message est alors terminé par un code de fin de message (Sp). Cette façon de faire conduit à une ambiguïté : si un octet est mal reçu, cela peut aussi produire une absence d'accusé de réception. C'est pourquoi est prévu en outre un accusé de réception appelé "acquittement général" ou "acquittement applicatif", à savoir : quand l'élément maitre a reçu tous les octets de données de la part de l'élément esclave, il envoie à l'élément esclave une trame $I^2C$ conventionnelle (NA) qui signifie que toutes les données ont été acquises et que l'élément esclave peut maintenant mettre à jour ou effacer toutes les données lues. Ainsi, une fois que l'élément maitre a réalisé la lecture à partir de la mémoire de l'élément esclave, et après qu'il ait envoyé un accusé de réception général, et seulement alors, la mémoire de lecture de l'élément esclave peut être mise à jour. L'adresse AD1 est déplacée jusqu'à la position du dernier octet lu par l'élément maitre, plus un. Quand tout a été lu, AD2 = AD1 . En cas de réception défectueuse, une nouvelle condition de départ suivie par l'adresse ducture de l'esclave permettra la relecture du même octet. Pour obtenir à nouveau l'information désirée du circuit d'interface BAM depuis le début, le micro-contrôleur peut aussi redemander de nouveau le numéro du service.

Un service parmi d'autres est le service par lequel le bus $I^2C$ transfère des données de configuration générale du micro-contrôleur µC vers l'interface BAM. Avant le transfert de la configuration, une remise à zéro du circuit d'interface doit être réalisée. Autrement cette demande de service n'est pas recevable (pas d'accusé de réception). Parmi les variables de la configuration (les bits du mot qui la définit) figure un bit qu'on appellera "EtatSite", définissant si la ligne MRQ doit ou non être activée par le circuit d'interface à chaque fois qu'aucune trame n'a été reçue de l'extérieur depuis un temps prédéterminé, programmable ou non. Cette procédure est différente de celle consistant à observer les trames VAN au moyen d'un circuit logique de diagnostic qui ne fait pas de différence entre des trames transmises et des trames reçues. L'activation de la ligne MRQ déclenche la lecture de l'état du circuit d'interface par le maitre et l'émission d'un accusé de réception correspondant. Dès que ce dernier a été reçu, la ligne MRQ est relâchée par le circuit d'interface et le bit "EtatSite" remis à zéro dans le registre d'état.

Il est clair que, bien que l'invention ait été décrite ci-dessus à propos d'un bus dit VAN, elle s'applique aussi avec d'autres bus série pour l'automobile, par exemple un bus de type dit CAN (développé par les firmes R. BOSCH GmbH et INTEL) ou un bus de type dit I-Bus (développé par le fabricant d'automobiles BMW).

## Revendications

1.  Système électronique de véhicule automobile comportant :

    - une pluralité de dispositifs appelés applications comprenant chacun au moins un micro-contrô-

leur (μC1) et divers autres constituants (IC1-ICn), ainsi qu'un premier bus (I2C) de type I$^2$C assurant les communications entre les constituants à l'intérieur de l'application,

- un second bus (VAN) de type série, différent du premier bus (I2C), assurant la communication des applications entre elles,

- et au niveau de chaque application un circuit d'interface (BAM) muni d'une mémoire vive de réception pour des messages et destiné à assurer une communication entre le premier bus (I2C) et le second bus (VAN), le micro-contrôleur (μC1) étant muni de moyens pour, lorsque, agissant en tant que maitre, il lit à partir du circuit d'interface esclave des données constituant un message, renvoyer un accusé de réception (A) après chaque octet reçu et pour, lorsqu'il ne désire plus lire, arrêter le message en ne renvoyant pas d'accusé de réception (A), **caractérisé en ce que** le micro-contrôleur (μC1) est en outre muni de moyens pour envoyer après réception complète d'un message une trame I$^2$C (NA) signifiant qu'il a acquis toutes les données, et le circuit d'interface esclave (BAM) est en outre muni de moyens pour, lorsqu'il est émetteur, interpréter la réception d'une telle trame I$^2$C.

2. Système électronique pour véhicule automobile selon la revendication précédente, **caractérisé en ce que** le circuit d'interface (BAM) est muni de moyens pour définir dans sa mémoire de réception des zones à utiliser au moyen de deux pointeurs d'adresse mis à jour à chaque instant en fonction de la réalisation des tâches qui sont dévolues à cette mémoire de réception, pointeurs qui délimitent, en considérant la mémoire comme circulaire, les zones disponibles respectivement pour la lecture et l'écriture.

3. Système électronique pour véhicule automobile selon l'une des revendications 1 ou 2, dans lequel est prévue une ligne dite de requête (MRQ) entre le circuit d'interface (BAM) et le micro-contrôleur (μC1), pour informer ce dernier lorsque de l'information nouvelle doit être acquise par lui, **caractérisé en ce que** le circuit d'interface (BAM) comporte des moyens pour, si la demande en a été faite par le micro-contrôleur (μC1), activer la ligne de requête à chaque fois qu'aucune trame n'a été reçue de l'extérieur depuis un temps prédéterminé éventuellement programmable.

## Claims

1. An electronic system for a motor vehicle including:

- a plurality of devices called applications, each comprising at least one microcontroller (μC1) and various other components (IC1-ICn), as well as a first I$^2$C-type of bus (I$^2$C) providing the communications between the components within the application,

- a second bus (VAN), of serial type, different from the first bus (I$^2$C), providing the communication for the applications among themselves, and, within each application, an interface circuit (BAM), equipped with a reception random-access memory for messages and intended to provide a communication between the first bus (I$^2$C) and the second bus (VAN) and, while the microcontroller (μC1), when acting as a master, reads with the slave interface circuit data forming a message, includes means for sending back an acknowledgement of receipt (A) after each received octet and for stopping the message by not sending back an acknowledgement of receipt (A) when the microcontroller no longer wishes to read, characterized in that the microcontroller (μC1) further includes means for sending an I$^2$C frame (NA) after a message has been received completely, which frame means that it has acquired all the data, and the slave interface circuit (BAM) further includes means for interpreting the reception of such an I$^2$C frame when it is transmitting.

2. An electronic system for a motor vehicle according to the preceding claim, characterized in that the interface circuit (BAM) is equipped with means for defining areas to be used in its reception memory by means of two address pointers updated at every instant as a function of the achievement of the tasks that are allotted to this reception memory, pointers that, while the memory is considered to be circular, define the available areas for reading and writing, respectively.

3. An electronic system for a motor vehicle according to one of Claims 1 or 2, in which a line, called request line (MRQ), is provided between the interface circuit (BAM) and the microcontroller (μC1) for informing the latter when new information has to be acquired by it, characterized in that the interface circuit (BAM) includes means for activating the request line, if the request therefor has been made by the microcontroller (μC1), each time no frame has been received from the outside for a possibly programmable predetermined period of time.

## Patentansprüche

1. Elektronisches System eines Kraftfahrzeugs mit

- einer Anzahl mit Anwendungen bezeichneter Geräte, die sowohl je zumindest einen Mikrocontroller und mehrere andere Bauteile als auch einen ersten Serienbus zum Herstellen der Verbindungen zwischen den Bauteilen der Anwendung,

- einem zweiten Bus ebenso vom Serientyp, jedoch abweichend vom ersten Serienbus, zum Herstellen der Verbindung für die Anwendungen untereinander, und

- in jeder Anwendung einer Schnittstellenschaltung, die mit einem Empfangs-Direktzugriffspeicher für Nachrichten und zum Herstellen der Verbindung zwischen dem ersten und dem zweiten Bus ausgerüstet ist,

dadurch gekennzeichnet, daß, wenn der Mikrocontroller mit Mitteln zum Rücksenden einer Empfangsbestätigung nach jedem empfangenen Datenposten, wenn er als Meister Daten liest, die eine Nachricht in der Sklaven-Schnittstellenschaltung bilden, und zum Anhalten der Nachricht, indem keine Empfangsbestätigung zurückgesandt wird, wenn er die erforderlichen Daten erhalten hat und nicht mehr lesen will, er außerdem Mittel zum Aussenden eines $I^2$C-DÜ-Blocks beim Empfang einer vollständigen Nachricht enthält, was bedeutet, daß alle Daten eingetroffen sind, und die Sklaven-Schnittstellenschaltung als Emitter außerdem Mittel zum Interpretieren des Empfangs eines derartigen $I^2$C-DÜ-Blocks beim Übertragen enthält.

2. Elektroniksystem für ein Kraftfahrzeug nach obigen Anspruch, dadurch gekennzeichnet, daß die Schnittstellenschaltung mit Mitteln zum Definieren von in seinem Empfangsspeicher zu verwendenden Bereichen, die mittels zwei Adreßzeiger zu jedem Zeitpunkt auf der Basis der Fertigstellung der Aufgaben aktualisiert werden, die diesem Empfangsspeicher gestellt werden, und diese Zeiger, ausgehend vom Speicher als kreisförmig, die zum lesen bzw. zum Schreiben verfügbaren Bereiche begrenzen.

3. Elektroniksystem für ein Kraftfahrzeug nach Anspruch 1 oder 2, worin eine Leitung mit der Bezeichnung Anfrageleitung zwischen der Schnittstellenschaltung und dem Mikrocontroller dazu angeordnet ist, dem letztgenannten zu melden, wenn er neue Daten erfassen muß, dadurch gekennzeichnet, daß die Schnittstellenschaltung Mittel zum Aktivieren der Anfrageleitung enthält, wenn die Anfrage dafür vom Mikrocontroller jedesmal gestellt wird, wenn in einer möglicherweise programmierbaren vorgegebenen Zeit von außen kein DÜ-Block empfangen wurde.

FIG.1

FIG.2

| St | Write adr | A | Serv n° | A | Data 1 | A | .... | Data n | A | Sp |
|----|-----------|---|---------|---|--------|---|------|--------|---|----|

## FIG.3

| St | Write adr | A | Serv n° | A | Rs | Read adr | A | Data 1 | A | .... | Data n | NA | Sp |
|----|-----------|---|---------|---|----|----------|---|--------|---|------|--------|----|----|

## FIG.4